# FASCICULE DE BREVET EUROPEEN

(11) **EP 0 399 871 B1**
(45) Date de publication et mention de la délivrance du brevet: **26.07.1995**
(21) Numéro de dépôt: 90401272.1
(22) Date de dépôt: 15.05.1990
(51) Int. Cl.: G01N 22/00

(54) **Dispositif de mesure de caractéristique électromagnétique d'un matériau à très haute température**
Vorrichtung zur Messung der elektromagnetischen Charakteristiken eines Materials mit sehr hoher Temperatur
Arrangement for the measurement of electromagnetic characteristics of a material on very high temperature

(30) Priorité: 22.05.1989 FR 8906660
(43) Date de publication de la demande: 28.11.1990
(73) Titulaire: SOCIETE EUROPEENNE DE PROPULSION, 92150 Suresnes (FR)
(72) Inventeur: Astier, Jean-Pierre, F-33600 Pessac (FR)
(74) Mandataire: Joly, Jean-Jacques

(56) Documents cités:
- GB-A- 1 115 129
- US-A- 3 025 463
- US-A- 4 287 495

## Description

La présente invention concerne la mesure de caractéristique électromagnétique d'un matériau, notamment de la permittivité complexe.

Différents procédés de mesure de la permittivité complexe d'un matériau diélectrique sont connus. Certains procédés utilisent un guide d'ondes, une ligne coaxiale ou une cavité résonante chargés par le matériau à tester. Un autre procédé connu utilise un guide d'ondes rayonnant dans le matériau à tester.

Dans certains cas, il est nécessaire d'effectuer des mesures de caractéristique électromagnétique sur des matériaux portés à température très élevée, c'est-à-dire à plus de 1 000°C. Il en est ainsi en particulier pour des matériaux diélectriques qui subissent un échauffement important lors de leur utilisation, tels que des matériaux utilisés dans des parties externes d'aéronefs ou autres engins aériens ou spatiaux.

Les procédés connus sont inappropriés lorsque la mesure doit être effectuée sur un matériau porté à température élevée. Il en est ainsi, dans le cas notamment d'un guide d'ondes en contact avec le matériau à tester, en raison des déformations d'origine thermique. En outre, les pertes thermiques par contact avec le guide d'ondes empêchent l'obtention d'une température homogène au sein du matériau.

Aussi, la présente invention a-t-elle pour but de fournir un dispositif particulièrement adapté à la mesure de caractéristique électromagnétique d'un matériau à très haute température.

Ce but est atteint au moyen d'un dispositif comprenant un guide d'ondes dont une extrémité présente un rebord extérieur en forme de flasque ayant une surface frontale plane qui définit un plan de calibration et qui est destinée à être appliquée contre une surface plane d'un échantillon du matériau à tester, un générateur couplé au guide d'ondes pour injecter dans celui-ci une onde électromagnétique à hyperfréquence, et des moyens de détection de l'onde réfléchie par le matériau, dispositif dans lequel, conformément à l'invention, au moins la partie terminale du guide d'ondes comprenant le flasque destiné à être appliqué contre le matériau à tester porté à très haute température est en composite réfractaire électriquement conducteur.

Il est à noter qu'un dispositif de mesure possédant toutes les caractéristiques présentes dans le préambule de la revendication 1 est déjà connu du document GB-A- 1115 129.

De préférence, la partie terminale du guide d'ondes est en un composite choisi parmi le carbone/carbone et le carbone/céramique, c'est-à-dire un composite constitué par un renfort fibreux en carbone densifié par une matrice en carbone ou en une matière céramique telle que du carbure de silicium.

L'utilisation d'une partie terminale en un composite réfractaire permet de conserver la référence du plan de calibration en raison de la stabilité thermique du composite. Par ailleurs, le caractère thermiquement isolant du composite fait qu'il ne se crée pas de pont thermique entre le matériau et le guide d'ondes.

L'invention sera mieux comprise à la lecture de la description faite ci-après, à titre indicatif, mais non limitatif, en référence aux dessins annexés sur lesquels :
- la figure 1 est un schéma d'ensemble d'un dispositif de mesure conforme à l'invention, et
- les figures 2 et 3 sont des vues plus détaillées, respectivement en coupe et de face, de la partie terminale du guide d'ondes sur laquelle est appliqué un échantillon du matériau à tester.

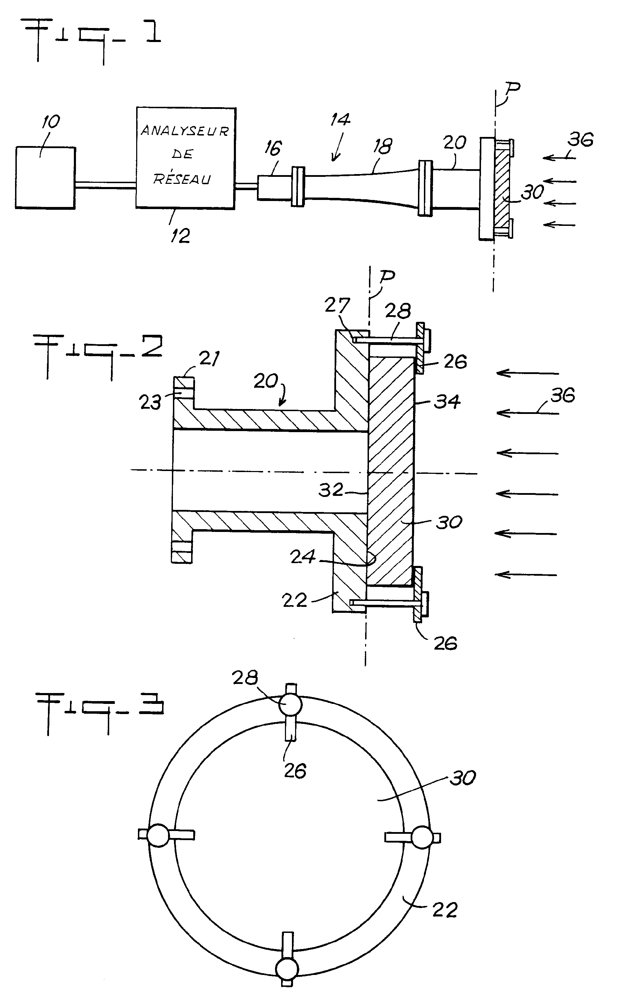

Comme montré par la figure 1, le dispositif de mesure comprend un générateur 10 d'ondes à hyperfréquence couplé à un guide d'ondes 14 à l'intérieur duquel les ondes se propagent jusqu'à l'extrémité du guide où elles rayonnent dans un échantillon 30 du matériau à tester. Un système d'analyse de réseau 12, par exemple un appareil commercialisé sous la référence 8 510 par la société des Etats-Unis d'Amérique Hewlett-Packard, est interposé entre le générateur 10 et le guide d'ondes 14 pour détecter les ondes réfléchies par le matériau à tester, afin de déterminer le facteur de réflexion en phase et en amplitude, ce qui permet d'en déduire la permittivité complexe du matériau testé. Un tel dispositif de mesure est bien connu dans son principe, de sorte qu'une description plus détaillée n'est pas nécessaire.

Dans sa partie terminale, montrée en détail par les figures 2 et 3, le guide d'ondes 14 est circulaire et est constitué par une pièce 20 munie à son extrémité d'un rebord annulaire extérieur 22 formant un flasque. La surface frontale plane 24 du flasque 22 définit un plan de calibration P. L'échantillon 30 de matériau à tester est constitué par une éprouvette en forme de disque dont une surface plane 32 est appliquée contre le flasque 22 et se situe par conséquent dans le plan de calibration.

Afin de réaliser une mesure à température élevée, l'échantillon 30 est soumis à un flux thermique 36 dirigé vers sa surface 34, opposée à la surface 32. Le flux thermique est produit par une source de chaleur, par exemple un four solaire (non représenté).

Le maintien de l'échantillon 30 contre le flasque 22 est assuré au moyen de doigts 26, au nombre de quatre dans l'exemple illustré, qui prennent appui sur la face 34 de l'échantillon 30 et sont fixés au flasque 22 par des vis 28.

La pièce terminale 20 du guide d'ondes est réalisée en matériau composite réfractaire, de préférence un matériau à renfort fibreux en carbone et à matrice en carbone ou en céramique, par exemple en carbure de silicium. Un tel matériau est électriquement conducteur, possède une grande stabilité thermique et conserve ses propriétés mécaniques aux hautes températures.

A son extrémité opposée à celle constituée par la pièce 20, le guide d'ondes 14 est constitué par un tronçon 16 à section rectangulaire raccordé à la pièce 20 par une transition standard guide d'ondes rectangulaire-guide d'ondes circulaire 18. Les liaisons entre les différentes parties constitutives du guide d'ondes 14 sont réalisées au moyen de brides.

La pièce terminale 20 est fabriquée par exemple comme suit. Une préforme fibreuse de la pièce 20 est réalisée par bobinage d'une bande de tissu sur un mandrin, pour former la partie tubulaire de la pièce 20, complété par un bobinage d'un ruban du même tissu, pour former le flasque 22 et la bride 21 servant à la liaison avec la pièce de transition 18. Les couches de tissu peuvent être liées entre elles par aiguilletage. La préforme ainsi réalisée est densifiée par infiltration chimique en phase vapeur du matériau de la matrice, par exemple du carbure de silicium. Un procédé de réalisation de composite carbone/carbure de silicium est décrit par exemple dans le brevet EP 0 172 082. Après densification, la pièce 20 est usinée, notamment pour rectification de sa surface cylindrique interne, de sa surface frontale 24 et de la surface terminale de la bride 21, et pour formation de trous 27 dans le flasque 22 pour la fixation des vis 28 et de trous 23 dans la bride 21 destinés au raccordement avec la pièce de transition 18.

Les doigts 26 de maintien de l'échantillon 30 sont avantageusement réalisés également en matériau composite réfractaire, par exemple en composite carbone/carbure de silicium, muni d'une protection anti-oxydation afin de conserver des propriétés mécaniques suffisantes aux hautes températures auxquelles l'échantillon est exposé. Comme le montre la figure 4, les doigts 26 prennent appui à la périphérie de l'échantillon 30 de manière à ne pas perturber les lignes de champ électromagnétique dans le matériau à tester.

Pour effectuer une mesure, l'échantillon de matériau à tester est placé à l'extrémité du guide d'ondes 20 et est soumis au flux thermique 36 pour amener l'échantillon 30 à la température voulue, par exemple au-delà de 1 000°C.

L'onde hyperfréquence produite par le générateur 10 est propagée sur le mode fondamental TE₁₁ par le guide d'ondes 14 pour rayonner dans l'échantillon 30. Le diamètre intérieur de la partie terminale 20 est déterminé pour pouvoir propager l'onde hyperfréquence, celle-ci ayant par exemple une fréquence comprise entre 2 et 40 GHz. L'analyseur de réseau 12 donner la valeur du facteur de réflexion, qui est celle du coefficient de réflexion pour le mode TE₁₁, en phase et en amplitude, ce qui permet de déduire la permittivité complexe.

Le système de mesure est préalablement calibré en plaçant une série de courts-circuits décalés de longueurs λg/12, λg/4 et 5 λg/12 (λg étant la longueur d'onde guidée) par rapport au plan P, à l'extrémité du guide d'ondes 14, et en effectuant les réglages nécessaires pour obtenir un coefficient de réflexion avec une atténuation de 0 dB et un déphasage de 180°.

L'utilisation d'une pièce terminale 20 en un matériau composite réfractaire qui, outre ses propriétés de conducteur électrique et de tenue mécanique à température élevée, présente une très grande stabilité dimensionnelle au regard des variations de température et constitue un isolant thermique, apporte plusieurs avantages décisifs autorisant la réalisation de mesures à de très hautes températures dépassant 1 000°C, voire même 2 000°C.

Ainsi, la stabilité dimensionnelle permet de conserver inchangée la position du plan de calibration entre le moment du réglage initial et celui où l'échantillon 30 à très haute température est en appui sur le flasque 22. Il n'en serait pas de même, en raison des dilatations d'origine thermique, avec une pièce terminale métallique, par exemple en cuivre, ce qui introduirait de substantielles erreurs de mesure. De plus, les dilatations d'origine thermique provoqueraient des déformations de la face frontale du flasque 22, avec, pour conséquence, un mauvais contact entre celui-ci et l'échantillon.

En outre, la propriété d'isolant thermique empêche le transfert de chaleur à l'interface entre l'échantillon 30 et le flasque 22, transfert qui se traduirait par un gradient de température au sein du matériau de l'échantillon. Le dispositif conforme à l'invention permet donc de conserver une température homogène dans tout le matériau irradié par les ondes à hyperfréquence.

## Revendications

1. Dispositif de mesure de caractéristique électromagnétique d'un matériau à très haute température, comprenant un guide d'ondes (14) dont une extrémité (20) présente un rebord extérieur en forme de flasque (22) ayant une surface frontale (24) plane qui définit un plan de calibration et qui est destinée à être appliquée contre une surface plane d'un échantillon (30) du matériau à tester, un générateur (10) couplé au guide d'ondes (14) pour injecter dans celui-ci une onde électromagnétique à hyperfréquence, et des moyens de détection (12) de l'onde réfléchie par le matériau,
caractérisé en ce qu'au moins la partie terminale (20) du guide d'ondes (14) comprenant le flasque (22) destiné à être appliqué contre le matériau à tester porté à très haute température est en composite réfractaire électriquement conducteur.

2. Dispositif selon la revendication 1, caractérisé en ce que la partie terminale (20) du guide d'ondes (14) est en un composite choisi parmi les carbone/carbone et carbone/céramique.

3. Dispositif selon l'une quelconque des revendications 1 et 2, caractérisé en ce qu'il comprend en outre des pièces (26) reliées au flasque (22) de la partie terminale (20) du guide d'ondes (14) et destinées à maintenir un échantillon (30) du matériau à tester contre le flasque (22), lesdites pièces (26) de maintien étant en composite réfractaire.

4. Dispositif selon l'une quelconque des revendications 1 à 3, caractérisé en ce qu'il comprend des moyens pour exposer un échantillon du matériau à tester à un flux thermique du côté opposé à celui appliqué contre le flasque de la partie terminale du guide d'ondes.

## Patentansprüche

1. Vorrichtung zum Messen der elektromagnetischen Charakteristik eines Materials mit sehr hoher Temperatur, bestehend aus einem Wellenleiter (14), dessen eines Ende (20) einen äußeren Bund in Form eines Flansches (22) hat, der eine ebene Stirnfläche (94) aufweist, die eine Kallibrierebene bildet und die dazu bestimmt ist, gegen eine ebene Fläche einer Probe (30) eines zu prüfenden Materials angelegt zu werden, einem Generator (10), der an den Wellenleiter angeschlossen ist, um in diesen eine ultrahochfrequente elektromagnetische Welle zu injizieren, und Einrichtungen (12) zur Detektion der vom Material reflektierten Welle,
**dadurch gekennzeichnet**, daß
wenigstens der Endabschnitt (20) des Wellenleiters (14), der den Flansch (22) umfaßt, der dazu bestimmt ist, gegen das zu prüfende Material angelegt zu werden, das auf eine sehr hohe Temperatur gebracht wurde, aus einem hitzefesten, elektrisch leitenden Verbundstoff besteht.

2. Vorrichtung nach Anspruch 1,
**dadurch gekennzeichnet**, daß
der Endabschnitt (20) des Wellenleiters (14) aus einem Verbundstoff besteht, der aus Kohlenstoff/Kohlenstoff und Kohlenstoff/Keramik ausgewählt ist.

3. Vorrichtung nach Anspruch 1 oder 2,
**dadurch gekennzeichnet**, daß
sie außerdem Teile (26) aufweist, die mit dem Flansch (22) des Endabschnitts (20) des Wellenleiters (14) verbunden und dazu bestimmt sind, eine Probe (30) des zu prüfenden Materials gegen den Flansch (22) zu halten, wobei diese Halteteile (26) aus einem hitzefesten Verbundstoff bestehen.

4. Vorrichtung nach einem der Ansprüche 1 - 3,
**dadurch gekennzeichnet**, daß
sie Einrichtungen aufweist, um eine Probe des zu prüfenden Materials einer Wärmeströmung auf der Seite auszusetzen, die der entgegengesetzt ist, die gegen den Flansch des Endabschnitts des Wellenleiters angelegt ist.

## Claims

1. Apparatus for measuring electromagnetic characteristics of a very high temperature material, comprising a waveguide (14) of which one end (20) presents an outside rim in the form of a test flange (22) having a plane front surface (24) defining a calibration plane and intended to be applied against a plane surface of a sample (30) of material to be tested, a generator (10) coupled to the waveguide (14) to inject an electromagnetic microwave therein, and means (12) for detecting the wave reflected by the material, characterized in that at least the terminal portion (20) of the waveguide (14) including the test flange (21) for application against the material to be tested at very high temperature is made of an electrically conductive refractory composite material.

2. Apparatus according to claim 1, characterized in that the terminal portion (20) of the waveguide (14) is made of a composite selected from carbon/carbon and carbon/ceramic.

3. Apparatus according to anyone of claims 1 and 2, characterized in that it further comprises parts (26) connected to the test flange (22) of the terminal portion (20) of the waveguide (14) and intended to hold a sample (30) of material to be tested against the flange (22), said holding parts (26) being made of a refractory composite material.

4. Apparatus according to anyone one of claims 1 to 3, characterized in that it comprises means for exposing a sample of material to be tested to a thermal flux on its side opposite from its side applied to the test flange of the terminal portion of the waveguide.
